Europäisches Patentamt

**European Patent Office**

**Office européen des brevets**

(11) Publication number: **0 021 638**
**A1**

(12) **EUROPEAN PATENT APPLICATION**

(21) Application number: **80301845.6**

(22) Date of filing: **03.06.80**

(51) Int. Cl.³: **F 16 J 15/10**
**G 01 F 15/14**

(30) Priority: **21.06.79 GB 7921753**

(43) Date of publication of application:
**07.01.81 Bulletin 81/1**

(84) Designated Contracting States:
**AT BE DE FR GB IT NL SE**

(71) Applicant: **UNITED GAS INDUSTRIES LIMITED**
**3-4, Bentinck Street**
**London W1M 6DH(GB)**

(72) Inventor: **Partington, Michael Stuart**
**28, Fir Tree Road**
**Banstead, Surrey SM7 1NG(GB)**

(74) Representative: **Betteridge, Eileen Margaret**
**216, Rowan Road**
**Streatham Vale London, SW16 5HX(GB)**

(54) **Method and apparatus for forming a gasket and its use.**

(57) A gasket is formed from a roll of viscous sealing material (18) which sets or cures to form a flexible solid. A masking plate (14) is located directly over a flange (12) on the member (e.g. a gas meter pan) which will use the gasket. A nearly-continuous slit (15) in the plate (14) is located over the flange with narrow bridges. A pusher (17) forces the roll (18) across the top of the plate and into slit (15), a following knife (19) removing excess material. The plate is removed from the pan before the viscous material sets so that the gaps left by narrow bridges are filled by the flowing material.

FIG. 2

EP 0 021 638 A1

Gaskets.

This invention relates to a method and apparatus for forming a gasket.

Gaskets have previously been made by cutting out required shapes from sheets of material comprised of a flexible sealing material on a supporting fabric base. According to U.K. Patent No. 1,212,839, an advance on this method has been proposed in which a stencil in the required shape was placed over a temporary base and the sealing material deposited through the stencil onto the base. The gasket was then removed from the base. This method has the disadvantages that the gasket had to be removed from the base and then placed in its location for use.

This invention provides a method of forming a gasket of the kind in which a viscous sealing material which sets or cures to a flexible solid form is directed by a masking plate to form a desired gasket shape characterized by the steps of placing said masking plate directly on a flange or other member which requires a gasket, forcing said viscous sealing material through said masking plate directly onto the flange, and removing said plate.

By the invention the intermediate steps of handling the gasket are entirely dispensed with.

A specific embodiment of the invention is shown in the accompanying drawings, in which:-

Figure 1   is a perspective view of a gas meter pan having a gasket,

Figure 2   is a diagrammatic side view of apparatus producing the gasket on the gas meter pan of Figure 1,   and

Figure 3   is a diagrammatic plan view of the apparatus of Figure 2.

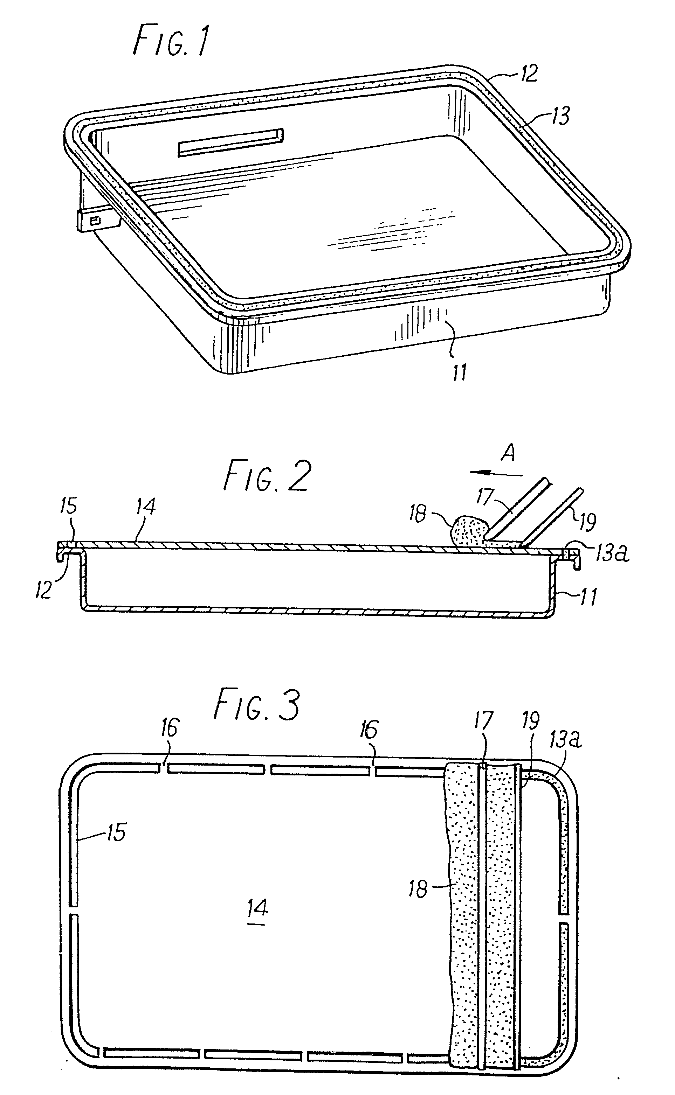

A gas meter in which the pan (11) of Figure 1 is to be used has a gas chamber formed by two pans joined together with a flexible diaphragm therebetween. Such gas meters are described in more detail in our patent application No. 7920155. Each pan has a flat flange (12) which in use sealingly abuts the similar flange of the other pan and is secured thereto, e.g. by clips. In order to form a good seal it is desirable to have a gasket of a compressible material between the two flanges, but such gaskets cause problems of location on the pans and also of expense.

According to this embodiment of the invention a gasket (13) is formed directly on one of the flanges by the apparatus shown in Figures 2 and 3. A metal masking plate (14) of the same shape as the open mouth of the pan is mounted over the flange of one pan (11) and secured thereto, e.g. by clips. An almost continuous slit (15) is formed in the plate at the desired position of the gasket. Thin bridges (16) break the slit in order to keep the plate in one piece. A roughly roll-shaped piece (18) of a highly viscous material is deposited (e.g. by a gun) directly onto one end of the plate. A rubber pusher (17) is then passed over the plate in the direction of Arrow A, pushing the roll of gasket material down into the slit (15) and across the plate. This action leaves residual amounts of gasket material (shown for clarity to an exaggerated scale in Figure 2) on the top of the plate, and this is removed by a knife (19) following the pusher (17) and cutting the residual gasket material off the plate. This leaves a clean gasket (13a) in the slit (15).

The plate is then removed and the gasket (13a), which is still viscous, flows together across the narrow openings formed by the bridges (16), so as to form a continuous band around the flange. However, it is too viscous to flow off the flange. Because of the viscous nature of the gasket material the band assumes a convex cross-section as it sets. The depth of the material deposited on the flange is a function of the thickness of the plate (14) which in a preferred example is 0.50 mm.

The gasket material is one which sets or cures to a flexible solid form and may, for instance, be nitryl rubber suspended in a solvent of the kind sold under the trade name BOSTIK. This is a thick sticky material which sets as the solvent evaporates, without other curing required. To ensure that the material remains viscous long enough to allow the bridges (16) to be closed, the evaporation of the solvent may be slowed up by carrying out the process in a closed container which becomes filled with the evaporated solvent. The viscosity of the material chosen must be thick enough for the material to remain

approximately in place when the plate is removed, but still sufficiently flowable to close the bridges (16).

Claims:

1. A method of forming a gasket of the kind in which a viscous sealing material which sets or cures to a flexible solid form is directed by a masking plate (14) to form a desired gasket shape characterized by the steps of placing said masking plate (14) directly on a flange (12) or other member which requires a gasket, forcing said viscous sealing material (18) through said masking plate (14) directly onto the flange (12), and removing said plate.

2. A method as claimed in claim 1, further characterized by the step of passing a knife (19) over the top of the plate after the sealing material has been forced onto said flange, whereby to remove any residual sealing material from the top of the plate.

3. Apparatus for forming a gasket of the kind comprising a masking plate (14) having one or more openings in the shape of the gasket and means for directing a viscous sealing material into said openings, characterized by said masking plate (14) being adapted to be mounted directly over a flange or other member which requires a gasket, and having a slit (15) of the same shape as the flange, which slit is broken by narrow bridges (16), the width of the bridges being chosen so that when the plate is removed the sealing material may flow across the bridges to form a continuous strip.

4. Apparatus as claimed in claim 3, having a pusher (17) and means for passing the pusher across the top of the plate whereby to push the viscous sealing material into the slit (15) further characterized by a knife (19) which is arranged to follow the pusher and remove residual material from the top of the plate.

5. Apparatus as claimed in claim 3 or claim 4 further characterized by the thickness of the plate (14) being of the order of 0.50 mm.

6. A gas meter pan characterized by having a gasket formed thereon by the method of claim 1 or claim 2.

FIG.1

FIG.2

FIG.3

## EUROPEAN SEARCH REPORT

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| | AU - B - 29034/67 (DOWTY SEALS LTD.)<br>* claim 1; fig. 1 and 2 *<br>-- | 1,3 | F 16 J 15/10<br>G 01 F 15/14 |
| | FR - A - 1 559 344 (DOWTY SEALS LTD.)<br>* page 3, columns 1 and 2; fig. 1 to 8 *<br>-- | 1,3 | |
| D | GB - A - 1 212 839 (DOWTY SEALS LTD.)<br>* fig. 1 to 5 *<br>-- | 1,3 | TECHNICAL FIELDS SEARCHED (Int.Cl.3) |
| | MACHINE MODERNE, No. 829, October 1978, Paris<br>"Un Joint Réalisé par Sérigraphie"<br>pages 85 and 86<br>* page 85, column 1 to page 86, column 1 *<br>-- | 1 | B 29 H 7/00<br>F 16 J 15/00<br>G 01 F 15/00 |
| A | DD - A - 138 808 (K. WIESER et al.)<br>* entire document *<br>-- | | |
| A | GB -A - 1 340 173 (THIOKOL CHEMICAL CORP.)<br>* entire document *<br>-- | | CATEGORY OF CITED DOCUMENTS |
| A | GB -A - 1 480 218 (DOWTY SEALS LTD.)<br>* entire document *<br>---- | | X: particularly relevant<br>A: technological background<br>O: non-written disclosure<br>P: intermediate document<br>T: theory or principle underlying the invention<br>E: conflicting application<br>D: document cited in the application<br>L: citation for other reasons |

X  The present search report has been drawn up for all claims

&: member of the same patent family, corresponding document

| Place of search | Date of completion of the search | Examiner |
|---|---|---|
| Berlin | 15-09-1980 | MASSALSKI |

EPO Form 1503.1 06.78